# EUROPEAN PATENT APPLICATION

(11) **EP 3 156 933 A1**
(43) Date of publication of application: **19.04.2017**
(21) Application number: 15306645.1
(22) Date of filing: 15.10.2015
(51) Int. Cl.: G06F 21/62, G06F 21/77, G06F 12/14

(54) **SYSTEM AND METHOD OF MANAGING APPLICATION DATA SEPARATION IN MEMORY WITH A DYNAMICALLY UPDATED DATA ACCESS TREE**

(71) Applicant: GEMALTO SA, 92190 Meudon (FR)
(72) Inventor: GALLAS, Frédéric, 13881 Gemenos Cedex (FR)
(74) Representative: Grevin, Emmanuel

(57) **Abstract**

The invention is method for managing access control in a system comprising a volatile memory and a non-volatile memory. The non-volatile memory comprises a first data of a first application and a second data of a second application. The method comprises the following steps:
- creating in the volatile memory a tree structure comprising a first reference to said first data and a second reference to said second data, said system being configured to allow access to first and second data only by a request using one of said references stored in volatile memory,
- upon activation of said first application, invalidating said second reference and updating the first reference with a value retrieved from the non-volatile memory.

## Description

### (Field of the invention)

The present invention relates to system and methods of managing access control. It relates particularly to systems and methods of managing access control to application data stored in non-volatile memory.

### (Background of the invention)

A secure element is either a tamper-resistant physical component able to store data and to provide services in a secure manner or a software component emulating such a component and providing a trusted storage area and trusted services. A secure element has an operating system configured to deny access to its resources to an entity which is not entitled. In general, a secure element has a limited amount of memory, a processor with limited capabilities and is devoid of battery. For instance a UICC (Universal Integrated Circuit Card) is a secure element which embeds SIM applications for telecommunication purposes. A secure element can be installed, fixedly or not, in a terminal, like a mobile phone or a tablet for example. In some cases, the terminals are constituted by machines that communicate with other machines for M2M (Machine to Machine) applications.

A secure element can be in the format of a smart card, or may be in any other format such as for example but not limited to a packaged chip as described in PCT/SE2008/050380, or any other format.

It is known to solder or weld the secure element in a host device, in order to get it dependent of this host device. This is done in M2M (Machine to Machine) applications. The same objective is reached when a chip (a secure element) containing an application is contained in the host device. The chip is for example soldered to the mother-board of the host device or machine and constitutes an embedded-secure element (eSE).

A removable secure element uniquely associated with its hosting device may also be considered as an embedded-secure element.

Several applications may be installed into a secure element. In this case, data of every applications are stored in the non-volatile memory of the secure element.

It is known to use a Memory Protection Unit (MPU) to enhance the control of access to data stored in non-volatile memory. Unfortunately, such MPU mechanism is hardware dependent and applies to memory clusters whose size is big and does not fit with fine granularity requirements.

When a system comprise several application data, there is a need to prevent an application to access data belonging to other applications.

### (Summary of the Invention)

The object of the present invention is a method for managing access control in a system, comprising a volatile memory and a non-volatile memory. A first data of a first application and a second data of a second application are stored in the non-volatile memory. The method comprises the following steps:
- creating, in the volatile memory, a tree structure intended to comprise a first reference to said first data and a second reference to said second data; said system being configured to allow access to first and second data only by a request using one of said references stored in volatile memory,
- upon activation of said first application, invalidating said second reference and updating the first reference with a value retrieved from the non-volatile memory.

Advantageously, a third data may be stored in the non-volatile memory, said third data being common to said first and second applications, the tree structure may comprise a third reference to said third data and said third reference may be kept unchanged upon activation of any one of said applications.

Advantageously, the non-volatile memory may comprise a plurality of physical pages and said first data may be stored in an area of the non-volatile memory which is page aligned.

Advantageously, the invalidating operation and updating operation may be performed by a software agent.

Advantageously, the system may be a secure element embedded in a host device.

Another object of the invention is a system comprising a volatile memory and a non-volatile memory. A first data belonging to a first application and a second data belonging to a second application are stored in the non-volatile memory. The system comprises a first agent adapted to create in the volatile memory a tree structure intended to comprise a first reference to said first data and a second reference to said second data. The system comprises a second agent adapted to allow access to first and second data only by a request using one of said references stored in volatile memory. The system comprises a third agent adapted to, upon activation of said first application, invalidate said second reference and update the first reference with a value retrieved from the non-volatile memory.

Advantageously, a third data may be stored in the non-volatile memory, the third data may be common to said first and second applications, the tree structure may comprise a third reference to said third data and said third agent may be adapted to keep unchanged said third reference upon activation of any of said applications.

Advantageously, the non-volatile memory may comprise a plurality of physical pages and said first data may be stored in an area of the non-volatile memory which is page aligned.

Advantageously, the third agent may be a software agent.

Advantageously, the system may be a secure element embedded in a host device.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of the architecture of a system adapted to control access to data of applications according to the invention;
- Figure 2 depicts schematically an example of a method for controlling access to data of applications according to the invention;
- Figure 3 is a first example of the tree structure in volatile memory according to the invention; and
- Figure 4 is a second example of the tree structure in volatile memory according to the invention; and
- Figure 5 is a third example of the tree structure in volatile memory according to the invention.

### (Detailed description of the preferred embodiments)

The invention may apply to management of access control in any type of memory. In particular, it may apply to management of access control in memory embedded in an electronic token like a smart card, a USB token, or a mobile handset.

An advantage of the invention is to allow a dynamic control of the attempt to access data belonging to applications. In particular on-the-fly control may be carried out for every access request.

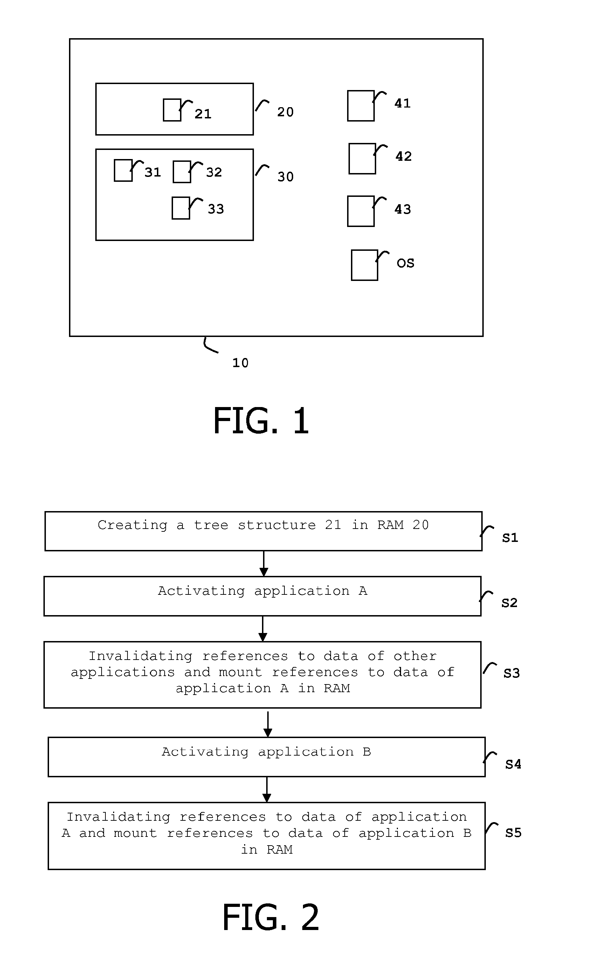

**Figure 1** shows a secure element 10 as an example of system according to an example of the invention. The secure element 10 contains a microprocessor (not drawn), a communication interface (not drawn) able to exchange data with an external device, a volatile memory 20 and a non-volatile memory 30. The volatile memory 20 may be a RAM and the non-volatile memory (NVM) 30 may be a flash memory for example.

In this example, the secure element 10 is configured to use a virtual memory mechanism which manages a logical to physical mapping of stored data. At application level, a request for accessing a data stored in the NVM uses a virtual (i.e. logical) address. Then a translation is performed to identify the physical address where the data is stored.

In this example, a persistent inode-tree structure is created in NVM 30. This inode-tree structure refers each application data stored in the NVM 30. For instance, the inode-tree structure may be similar to the LogFS model. The inode-tree structure allows to index a unique virtual address space which is used to store data of all applications.

In this example, the NVM 30 comprises a set of physical pages which have a unique size.

Preferably, all data belonging to an application are located in a dedicated area of the virtual memory and this area is page aligned. Thus, a page contains data belonging to a single application.

It is to be noted that only one application may be active at a time.

Two software applications are assumed to be installed in the secure element 10 of Figure 1. Data 31 of the first application and data 32 of the second application are stored in the non-volatile memory 30. In addition a common data 33 - shared by both applications - is also stored in the non-volatile memory 30.

The secure element 10 also comprises an operating system OS and three agents 41, 42 and 43.

The agent 41 is designed to create in the volatile memory 20 a tree structure 21 which indexes the application data stored in the non-volatile memory 30. In particular, the tree structure 21 is intended to comprise a reference to the data 31, a reference to the data 32 and a reference to the data 33. The agent 41 is designed to build the tree structure 21 from the persistent inode-tree structure of the NVM 30.

The agent 41 is configured to create the tree structure 21 as soon as the secure element 10 is started. Thus the tree structure 21 is generated as soon as the operating system OS is started.

Preferably, the tree structure 21 has two levels: a root level and only one leaf level. The references to the data 31, 32 and 33 are stored at the leaf level.

Advantageously, the references to application data are implemented as pointers containing virtual addresses of the data stored in NVM 30.

The agent 42 is adapted to allow access to the application data stored in the NVM 30 only by a request using one (or several) of the references stored in the tree structure 21. Thus an application cannot directly access the NVM without an address conversion operation based on a virtual address coming from the tree structure 21. In other words, all attempts to access the data stored in NVM 30 are rejected if they try to bypass the tree structure 21.

In one example, the agent 42 is a part of the operating system OS and is in charge of data access in the non-volatile memory.

When an application is activated, the agent 43 is configured to update the references of data of the activated application and to invalidate all references belonging to the other applications, upon activation of the application.

Advantageously, the agent 43 may be configured to preserve the common data 33 by retaining its current reference value. In other words, the agent 43 may keep unchanged the reference to the common data 33 upon activation of any application.

The agent 43 is configured to retrieve the value of these references from the non-volatile memory 30. The agent 43 may overwrite the references to be invalidated with a specific pattern. For example, the agent 43 may write the value 0xFFFF or 0x0000.

Advantageously, a contiguous memory range (in NVM) is allocated to each application so that the operating system and the agents are able to determine which application is the owner of stored data. Alternatively, each data block (or memory block or memory page) may contain a reference of its corresponding application.

**Figure 2** depicts schematically an example of a method for controlling access to application data according to the invention.

At a first step S1, the agent 41 is trigged at the end of the boot phase of the secure element 10. The agent 41 builds the tree structure 21 in the volatile memory 20 by reading the inode-tree structure in the NVM 30. At this stage no application is active and only the common data (shared by all applications) is referenced in the tree structure 21.

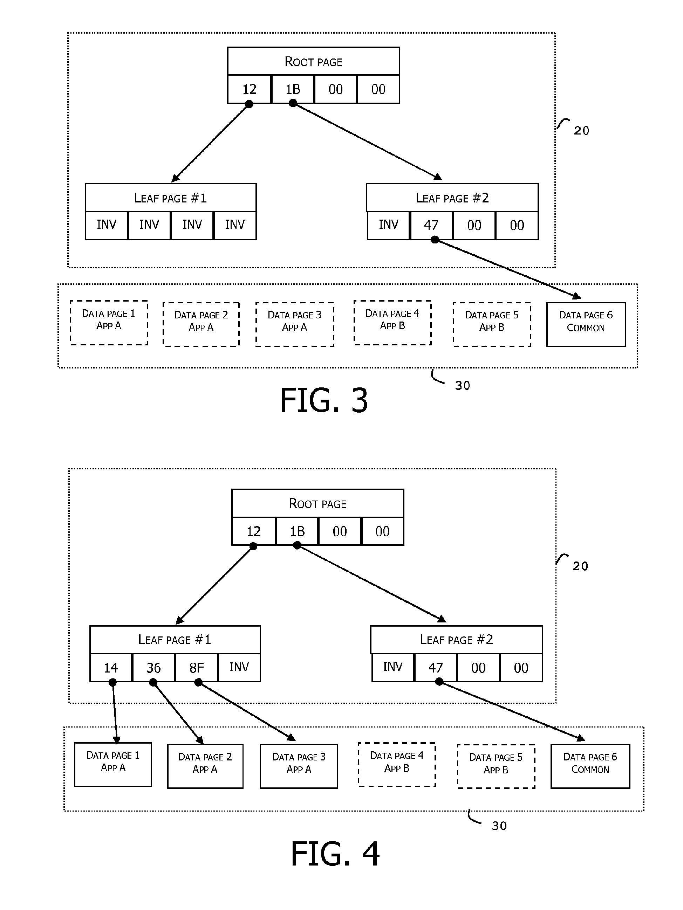

**Figure 3** illustrates an example of the tree structure 21 in the volatile memory 20 at the end of the step S1.

The tree structure 21 has a root (called Root Page) which comprises four pointers. The first pointer (with a value equal to "12" provided as example) refers to the first leaf (called Leaf Page #1) and the second pointer (with a value equal to "1B" provided as example) refers to the second leaf (called Leaf Page #2). The other pointers of the root are idle. (With a value equal to "00" provided for example)

The first leaf comprises four pointers which are disabled. For clarity, these pointers are shown with a value equal to "INV" meaning that they are invalidated. The real value stored in these pointers may be "FF" or "FFFF" for instance.

The second leaf comprises four pointers. One pointer is disabled (value "INV"), two are idle (i.e. not used - with value "00") and the fourth pointer (with a value equal to "47" provided as example) refers to the common data (noted Data Page #6 Common) stored in the NVM 30.

All other application data stored in NVM 30 are not reachable via the tree structure 21. They are drawn in dashed line.

At a second step S2, the application A is activated in the secure element 10.

At a third step S3, the agent 43 is trigged by the application activation. The agent 43 invalidates the references to data belonging to the previously active application (nothing to do in this example) in the tree structure 21.

Then the agent 43 mounts the references to data belonging to the application A in the tree structure 21 by retrieving the relevant information from the inode-tree structure of the NVM 30.

**Figure 4** illustrates an example of the tree structure 21 at the end of the step S3.

Three pointers of the first leaf have been updated with the values refering the data of application A. In this example, the pointers contains the values "14", "36", respectively "8F" which refer to Data Page #1, Data Page #2, respectively Data Page #3 in NVM 30. The fourth pointer of the first leaf remains disabled since it is intended to refer to data belonging to another application, namely Application B. The second leaf remains unchanged.

Thanks to the invention, the active application can only access its own data and the common data stored in NVM. Thus a request to access the data belonging to application B will fail since the tree structure 21 contain no reference to the data of application B. Moreover all attempts to access directly (i.e. without using the tree structure 21) the data in NVM 30 are denied by the secure element 10.

At a fourth step S4, the application B is activated in the secure element 10. It is to be noted that the activation of the application B causes the deactivation of the application A.

At a fifth step S5, the agent 43 is trigged by the application activation. The agent 43 invalidates the references to data belonging to the previously active application (i.e. three pointers to data of application A) in the tree structure 21.

Then the agent 43 mounts the references to data belonging to the application B in the tree structure 21.

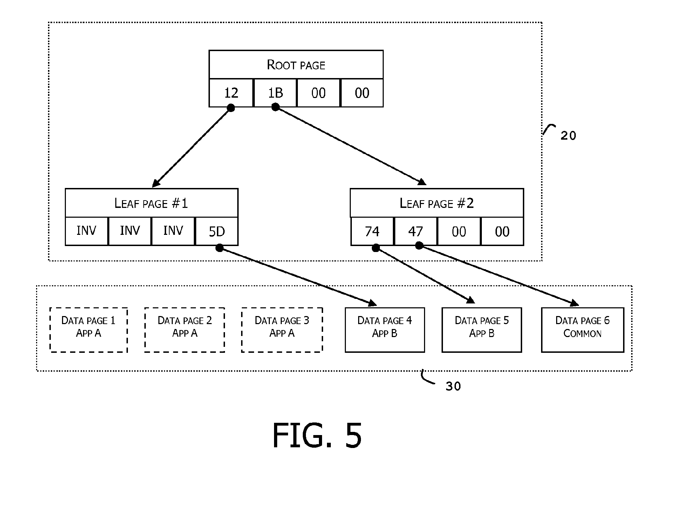

**Figure 5** illustrates an example of the tree structure 21 at the end of the step S5.

Three pointers of the first leaf have been disabled since they refer the data of application A. In this example, these three pointers are shown with the value "INV" meaning they are deactivated. The fourth pointer of the first leaf has been updated and contain a value (ex: "5D") referring to a data ("Data Page #4") belonging to application B. Similarly, a pointer of the second leaf has been updated (value "74") to refer to another data ("Data Page #5") of the application B. The other pointers of the second leaf remain unchanged since they are either unused (idle) or refer to common data.

In another embodiment, the tree structure 21 may not contain reference to common data shared by several applications.

The agents 41, 42 and 43 may be implemented as separate software components or combined in one or two agents.

Thanks to the invention a malicious application can neither dump data of other applications nor corrupt data belonging to other applications.

An advantage of the invention is to allow systematic control of access to data by an application, regardless of the language in which the application is developed.

Another advantage of the invention is to provide a mechanism for controlling access to stored data regardless of the underlying hardware layers.

It must be understood, within the scope of the invention that the above-described embodiments are provided as non-limitative examples. In particular, the software applications may be written in any languages. The tree structure may comprise several levels of leaf. The system is not necessarily a secure element and may be any device comprising a volatile memory and a non-volatile memory. The system is not necessarily an embedded entity.

The tree structure may refer data belonging to more than two applications.

## Claims

1. A **method** for managing access control in a system (10), comprising a volatile memory (20) and a non-volatile memory (30), a first data (31) of a first application and a second data (32) of a second application being stored in said non-volatile memory (30),
**characterized in that** said method comprises the following steps:
- creating in the volatile memory (20) a tree structure (21) intended to comprise a first reference to said first data (31) and a second reference to said second data (32), said system (10) being configured to allow access to first and second data (31,32) only by a request using one of said references stored in volatile memory (20),
- upon activation of said first application, invalidating said second reference and updating the first reference with a value retrieved from the non-volatile memory (30).

2. A method according to claim 1, wherein a third data is stored in the non-volatile memory (30), said third data (33) being common to said first and second applications, wherein the tree structure comprises a third reference to said third data (33) and wherein said third reference is kept unchanged upon activation of any one of said applications.

3. A method according to claim 1, wherein said non-volatile memory (30) comprises a plurality of physical pages and wherein said first data (31) is stored in an area of the non-volatile memory (30) which is page aligned.

4. A method according to claim 1, wherein the invalidating operation and updating operation are performed by a software agent (43).

5. A method according to claim 1, wherein the system (10) is a secure element embedded in a host device.

6. A **system** (10) comprising a volatile memory (20) and a non-volatile memory (30), a first data (31) of a first application and a second data (32) of a second application being stored in said non-volatile memory (30),
**characterized in that** the system (10) comprises a first agent (41) adapted to create in the volatile memory (20) a tree structure (21) intended to comprise a first reference to said first data (31) and a second reference to said second data (32), **in that** the system (10) comprises a second agent (42) adapted to allow access to first and second data (31,32) only by a request using one of said references stored in volatile memory (20), and **in that** the system (10) comprises a third agent (43) adapted to, upon activation of said first application, invalidate said second reference and update the first reference with a value retrieved from the non-volatile memory (30).

7. A system (10) according to claim 6 wherein a third data (33) is stored in the non-volatile memory (30), said third data (33) being common to said first and second applications, wherein the tree structure comprises a third reference to said third data (33) and wherein said third agent (43) is adapted to keep unchanged said third reference upon activation of any of said applications.

8. A system (10) according to claim 6 wherein said non-volatile memory (30) comprises a plurality of physical pages and wherein said first data (31) is stored in an area of the non-volatile memory (30) which is page aligned.

9. A system (10) according to claim 6 wherein said third agent (43) is a software agent.

10. A system (10) according to claim 6 wherein the system (10) is a secure element embedded in a host device.
